# EUROPÄISCHE PATENTANMELDUNG

(11) **EP 3 889 461 A1**
(43) Veröffentlichungstag der Anmeldung: **06.10.2021**
(21) Anmeldenummer: 21165767.1
(22) Anmeldetag: 30.03.2021
(51) Int. Cl.: F16G 11/06, F16G 11/04, F16G 11/14

(54) **LÖSBARE SEILENDVERBINDUNG FÜR HOCHMODULARE FASERSEILE**

(30) Priorität: 31.03.2020 DE 102020108930
(71) Anmelder: Universität Stuttgart, 70174 Stuttgart (DE)
(72) Erfinder: Novak, Gregor, 70569 Stuttgart (DE)
(74) Vertreter: DREISS Patentanwälte PartG mbB

(57) **Zusammenfassung**

Es wird eine lösbare Seilverbindung für hochmodulare Faserseile vorgeschlagen. Die Seilendverbindung ermöglicht es, vor Ort auf einfache und sichere Weise ein hochmodulares Faserseil beispielsweise mit einem Bolzenauge (3) zu verbinden. Dabei wird eine nahezu ideale Krafteinleitung bzw. Kraftübertragung zwischen den Halbschalen (1.1) und (1.2) der Seilendverbindung und dem Faserseil (17) erreicht.

## Beschreibung

Die Erfindung betrifft eine lösbare Seilendverbindung für ein Faserseil, das aus mehreren miteinander verschlungenen Filamenten besteht. Faserseile können aus herkömmlichen Fasern oder hochmodularen Fasern bestehen. Herkömmliche Faserseile können beispielsweise Fasern aus Polyester und/oder Mischungen aus Polyester und Polyamid umfassen. Hochmodulare Faserseile können beispielsweise Fasern aus HMPE und/oder Mischungen aus HMPE (hochmodulares Polyethylen) und LCP-Fasern umfassen.

Für die Hersteller und Anwender von Hebezeugen sind hochmodulare Faserseile vor allem wegen deren hoher Lebensdauer sehr vorteilhaft. Ein weiterer Vorteil hochmodulare Faserseile ist deren geringes Gewicht und die Möglichkeit, verglichen mit herkömmlichen Stahlseilen, engere Biegeradien zu realisieren. Dadurch können leichtere und kompaktere Konstruktionen realisiert werden.

Aufgrund der großen Unterschiede in den Material- und Gebrauchseigenschaften von Stahlseilen und hochmodularen Faserseilen können Lösungen aus dem Bereich von Stahlseilen nicht auf den Bereich der hochmodularen Faserseile übertragen werden.

Allgemein besteht bei Faserseilen ein Bedarf an lösbaren Seilendverbindungen; lösbare Seilendverbindungen werden zum Beispiel benötigt, wenn in beengten räumlichen Verhältnissen ein Faserseil vor Ort an einem Bauteil befestigt werden muss.

Aus dem Bereich der Faserseile sind derzeit nur unlösbare Seilendverbindungen bekannt. Beispiele hierfür werden in der JP 2013-087380 A und der JP 2014-058761 A beschrieben.

Der Erfindung liegt die Aufgabe zugrunde, eine lösbare Seilendverbindung für hochmodulare Faserseile bereitzustellen, welche sehr einfach vor Ort zusammengebaut aber auch gelöst werden kann. Sie muss darüber hinaus, sicher die von dem Faserseil eingeleiteten Kräfte auf ein Endteil der Seilendverbindung übertragen.

Diese Aufgabe wird erfindungsgemäß durch eine Seilendverbindung mit einem Seil und einem Endteil für eine Montage oder Halterung des Faserseils gelöst, wobei das Faserseil aus mehreren miteinander verschlungenen Filamenten besteht, wobei die Seilendverbindung zwei gegeneinander verspannbare Halbschalen umfasst und wobei in jeder Halbschale zwei Klemmnuten ausgebildet sind.

Durch diese Klemmnuten kann eine lösbare reibschlüssige Klemmverbindung zwischen dem Faserseil und den Halbschalen bzw. dem Endteil hergestellt werden. Dadurch wird die Last des Faserseils über eine relativ lange Strecke auf die Halbschalen bzw. das Endteil übertragen. Die Länge der Klemmung ergibt sich aus der Summe der Länge beider Klemmnuten. Die Klemmnuten können parallel oder aufeinander zulaufend ausgeführt sein.

Um die Krafteinleitung zwischen Faserseil und den Halbschalen weiter zu verbessern, ist in den Klemmnuten mindestens eine, bevorzugt jedoch mehrere Querrippen ausgebildet. Diese Querrippen verringern lokal den Querschnitt der Klemmnuten, so dass dort lokal eine noch höhere Flächenpressung zwischen Faserseil und den Halbschalen stattfindet. Dadurch wird die Kraftübertragung zwischen Faserseil und dem Endteil weiter verbessert.

Um die Klemmwirkung zwischen den Halbschalen und dem zu klemmenden Faserseil zu verbessern und gleichzeitig eine Reproduzierbarkeit zu erreichen ist vorgesehen, dass eine Tiefe T der Klemmnuten kleiner als 0,5-mal dem Klemmdurchmesser des zu klemmenden Faserseils ist.

Durch das Anziehen bzw. Verspannen der Halbschalen wird ein definierter Reibschluss zwischen Faserseil und den Halbschalen erzeugt. Der Reibschluss wird konstruktiv begrenzt durch die Tiefe der Klemmnuten. Wenn nämlich die Halbschalen aneinander anliegen, dann ist ein weiteres Zusammendrücken des Faserseils im Bereich der Klemmnuten nicht mehr möglich. Dadurch wird eine unzulässig hohe Klemmkraft, die auf das Faserseil wirkt, konstruktiv verhindert. Eine zu große Flächenpressung könnte zu Schäden der Filamente des Faserseils führen und dadurch dessen Belastbarkeit reduzieren.

Es hat sich als vorteilhaft erwiesen, wenn die Mindesttiefe der Klemmnuten ca. 0,3-mal der Nenndurchmesser D_{Nenn} des zu klemmenden Faserseils ist. Bei einem weichen Seil ist die Mindesttiefe der Klemmnuten kleiner, nämlich ca. 0,28-mal oder sogar nur 0,26-mal der Nenndurchmesser D_{Nenn} des zu klemmenden Faserseils.,

In weiterer vorteilhafter Ausgestaltung der Erfindung ist eine Breite B der Klemmnuten am Eintritt des Seils (=Eintrittsbreite) kleiner oder gleich als 0,9-mal dem Nenndurchmesser des zu klemmenden Faserseils. Dadurch wird eine Klemmwirkung quer auf das Faserseil ausgeübt, wobei die daraus resultierende Klemmkraft parallel zu der Trennebene zwischen den Halbschalen auf das Seil wirkt. Außerdem wird dadurch verhindert, dass das Faserseil seitlich ausweichen kann, wenn die Halbschalen gegeneinander verspannt werden, so dass im Ergebnis eine definierte und reproduzierbare Klemmwirkung durch das Verspannen der Halbschalen entsteht.

Um einerseits eine optimale Klemmwirkung zu erzielen und gleichzeitig die Belastung des zu klemmenden Faserseils zu minimieren ist es vorgesehen, dass die Breite und/oder die Tiefe der Klemmnuten sich in Längsrichtung der Klemmnuten ändert. Die Breite B der Klemmnuten verjüngt sich vom Eintritt bis zum Austritt um mindestens 10%. Ebenso kann die Tiefe T der Klemmnuten vom Eintritt bis zum Austritt um mindestens 10% abnehmen.

Diese Ausführungsform macht sich den Effekt zu Nutze, dass ein Faserseil, das einer hohen Last ausgesetzt ist, seinen Durchmesser verringert. Bei der erfindungsgemäßen Seilendverbindung wird die Last des Faserseils über die Länge der Klemmnuten auf die Halbschalen übertragen. Die Last des Faserseils nimmt daher in den Klemmnuten kontinuierlich ab. Dadurch ist der Durchmesser des Faserseils abhängig von dem Ort des Faserseils in der Klemmnut. Durch die kegelförmige Verringerung von der Breite und/oder der Tiefe der Klemmnuten wird die Klemmwirkung unter Last vergleichmäßigt.

Es hat sich als vorteilhaft erwiesen, wenn ein Kegelverhältnis der Klemmnuten mindestens bereichsweise einen Wert von 0,01 annimmt. Dieses Kegelverhältnis entspricht in etwa der zu erwartenden Aufweitung bzw. Durchmesseränderung des Faserseils, wenn es unter Last ist und diese Last durch Reibschluss auf die Halbschalen überträgt. Anders ausgedrückt: Die spezifische Flächenpressung zwischen Halbschale und dem Faserseil ist über die Länge der Klemmnuten annähernd konstant und zwar dann, wenn das Faserseil unter Lasteinfluss steht.

Das Verspannen der beiden Halbschalen erfolgt bevorzugterweise durch eine oder mehrere Schrauben. Dazu können in vorteilhafter Weiterbildung in den Halbschalen Durchgangsöffnungen vorhanden sein. Durch diese werden Schrauben gesteckt und anschließend wird eine Mutter auf die Schraube gedreht. In vielen Fällen vorteilhaft, wenn zwei, drei oder sogar mehr Schraubverbindungen vorgesehen sind. Dadurch wird die Klemmkraft gleichmäßiger in die Halbschalen eingeleitet und es ergeben sich dadurch gleichmäßigere Reibschlussverhältnisse zwischen dem zu klemmenden Faserseil und den Halbschalen. Außerdem ist bei zwei oder mehr Schraubverbindungen eine gewisse Redundanz vorhanden.

Die erfindungsgemäßen Halbschalen können aus Kunststoff, bevorzugt aus Polyamid hergestellt werden. Dieses Material hat keine negativen Auswirkungen auf die hochmodularen Faserseile. Korrosion ist ebenfalls kein Thema und die Halbschalen können auf sehr einfache Weise beispielsweise in einem 3D-Druckverfahren hergestellt werden. Dann ist es möglich, für nahezu jede Anwendung individuell die gewünschten Halbschalen herzustellen. Bezüglich der Geometrie der Klemmnuten, der Form der Querrippen und anderer Parameter bestehen kaum Restriktionen und die Halbschalen sind optimal an den Einsatzfall anpassbar.

Ein weiterer Vorteil des 3D-Drucks ist darin zu sehen, dass die Oberfläche relativ rau ist. In vielen Anwendungen ist diese raue Oberfläche ein unerwünschter Nebeneffekt. Im Zusammenhang mit der Erfindung ist er erwünscht, weil er den Reibschluss zwischen Faserseil und Halbschalen verbessert, ohne das Faserseil zu beschädigen.

Das Endteil der erfindungsgemäßen Seilendverbindung kann ein Bolzenauge oder ein beliebiger anderer Befestigungspunkt für eine Seilendverbindung sein. Das Bolzenauge kann an einer oder beiden Klemmplatten Halbschalen angeformt sein.

Es ist aber auch möglich, dass die Halbschalen und das Bolzenauge als gesonderte Bauteile hergestellt werden. Dann kann das Bolzenauge aus einem anderen Material hergestellt werden als die Halbschalen. Beispielsweise, wenn das Bolzenauge mit einer Stahlkonstruktion verschraubt werden soll, dann kann es vorteilhaft sein, das Bolzenauge aus Metall herzustellen, während die Halbschalen nach wie vor aus Kunststoff hergestellt werden können.

Weitere Vorteile und vorteilhafte Ausgestaltungen der Erfindung sind der nachfolgenden Zeichnung, deren Beschreibung und den Patentansprüchen entnehmbar.

Alle in der Zeichnung, deren Beschreibung und in den Patentansprüchen offenbarten Merkmale können sowohl einzeln als auch in beliebiger Kombination erfindungswesentlich sein.

Es zeigen:
- Figur 1: eine isometrische Darstellung eines Ausführungsbeispiels einer erfindungsgemäßen lösbaren Seilendverbindung (ohne Faserseil),
- Figur 2: eine Draufsicht auf eine Halbschale mit angeformtem Bolzenauge (ohne Faserseil),
- Figur 3: die Draufsicht auf die Halbschale gemäß Figur 2 mit eingelegtem Faserseil,
- Figur 4: eine Isometrie einer erfindungsgemäßen Halbschale,
- Figur 5: eine Draufsicht auf die erfindungsgemäße Halbschale gemäß Figur 4,
- Figur 6: einen Schnitt entlang der Linie A-A,
- Figur 7: einen Schnitt entlang der Linie B-B und
- Figur 8: einen Schnitt durch die Halbschalen entlang der Linie C-C.

### Beschreibung der Ausführungsbeispiele

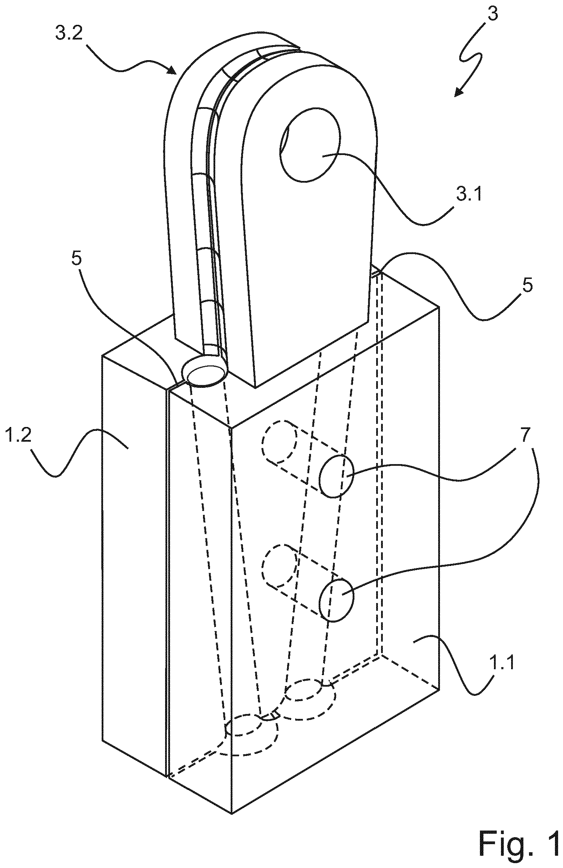

In der Figur 1 ist eine Isometrie einer erfindungsgemäßen lösbaren Seilendverbindung ohne Faserseil und ohne Spannschrauben dargestellt. Die Seilendverbindung umfasst zwei Halbschalen 1, die spiegelbildlich zu einer Trennebene aufgebaut sind. An dem in Figur 1 oberen Ende der Halbschalen 1 ist ein Bolzenauge 3 ausgebildet. Das Bolzenauge 3 ist integraler Bestandteil der Halbschalen 1.1 bzw. 1.2.

Zwischen den Halbschalen 1.1 und der einen Hälfte des Bolzenauges 3.1 sowie der anderen Halbschale 1.2 und der anderen Hälfte des Bolzenauges 3.2 verläuft eine Trennebene 5. Die Trennebene 5 teilt bei diesem Ausführungsbeispiel sowohl die Halbschalen 1 als auch das Bolzenauge 3 in zwei symmetrische Hälften. Wie bereits erwähnt sind in der Regel eine Halbschale 1.1, bzw. 1.2 und eine Hälfte 3.1 bzw. 3.2 des Bolzenauges 3 zu einem Bauteil zusammengefasst und werden beispielsweise mit einem generativen Fertigungsverfahren hergestellt.

Es ist aber auch möglich, die Hälften 3.1 bzw. 3.2 des Bolzenauges 3 als separates Bauteil herzustellen und dann mit der entsprechenden Halbschale 1.1 bzw. 1.2 zu verbinden (z. B. durch Schrauben).

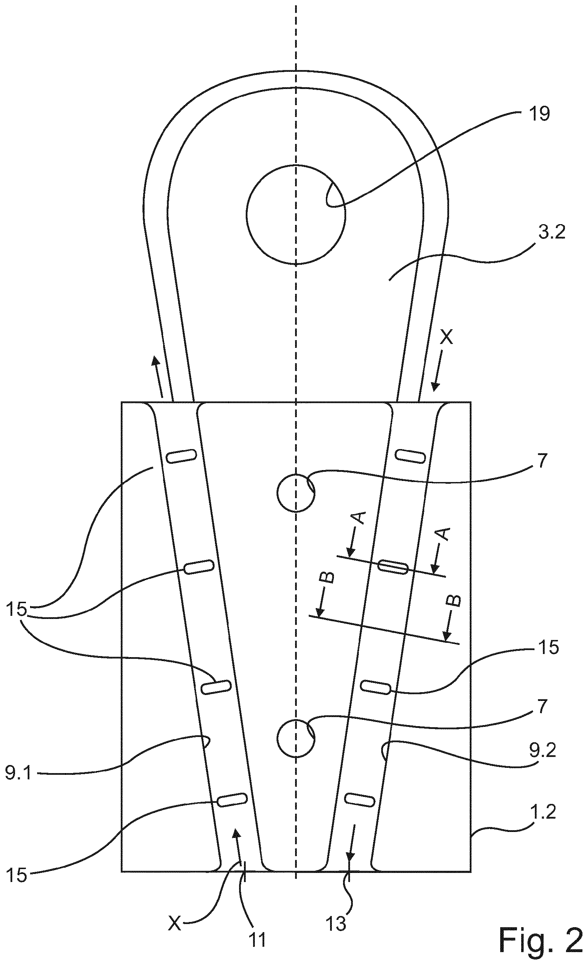

Die Details der Halbschalen 1 und des Bolzenauges werden nachfolgend im Zusammenhang mit den Figuren 2 ff. noch näher erläutert.

In der Figur 1 sind zwei Durchgangsöffnungen 7 ausgebildet. Wenn ein Faserseil (in Figur 1 nicht dargestellt) zwischen den beiden Halbschalen 1.1 und 1.2 geklemmt werden soll, dann werden Spannschrauben durch die Durchgangsöffnungen 7 gesteckt und auf der Gegenseite werden Muttern auf die Spannschrauben gedreht. Durch Anziehen der Muttern kann die Klemmkraft zwischen den Halbschalen 1.1, 1.2 und dem Faserseil auf einfache Weise erzeugt werden.

Die Durchgangslöcher können in einer Halbschale durch Gewindebohrungen oder Gewindeeinsätze ersetzt sein. In diesem Fall kann durch Anziehen der Spannschrauben die Klemmkraft zwischen den Halbschalen 1.1, 1.2 und dem Faserseil auf einfache Weise erzeugt werden.

Wenn die Halbschalen 1.1 und 1.2 an der Trennebene 5 aneinander anliegen, dann ist eine weitere Erhöhung der auf das Faserseil wirkenden Klemmkraft nicht möglich, so das ein Quetschen oder Beschädigen der Filamente des Faserseils durch eine zu hohe Klemmkraft konstruktiv wirkungsvoll verhindert werden kann.

In der Figur 2 ist nun eine Halbschale 1.1 und mit dem dazugehörigen "halben" Bolzenauge 3.1 dargestellt. Dabei ist der Blick auf die Trennebene 5 gerichtet. In der Figur 2 ist gut zu erkennen, dass die Halbschalen 1 jeweils zwei Klemmnuten 9.1. und 9.2 aufweisen. Die Klemmnuten 9.1 haben eine Längsachse. Im Sinne der Erfindung beginnt eine Längsachse X an dem Ende der ersten Klemmnut 9.1, das dem Bolzenauge 3 gegenüberliegend angeordnet ist. Der Ursprung der Längsachse ist in der Figur 2 mit 11 bezeichnet. Die Längsachse X verläuft durch die erste Klemmnut 9.1, das heißt in der Figur 2 von unten nach oben. Sie setzt sich fort in der zweiten Klemmnut 9.1. Die Richtung der Längsachse X ist in der Nut 9.2 von oben nach unten.

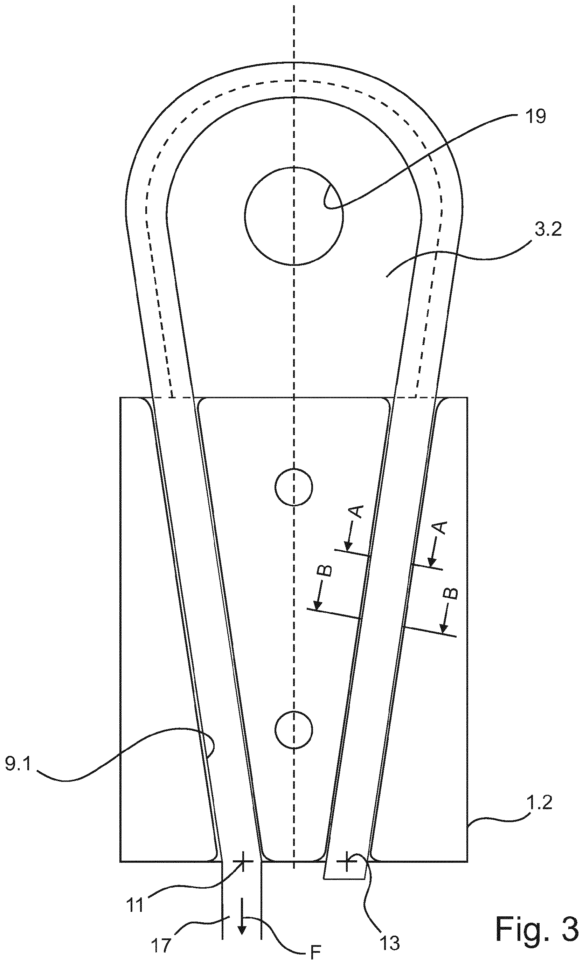

An dem Punkt 13 endet das Faserseil, wie sich aus der Figur 3 ergibt. Dort hat die Längsachse X den größten Wert.

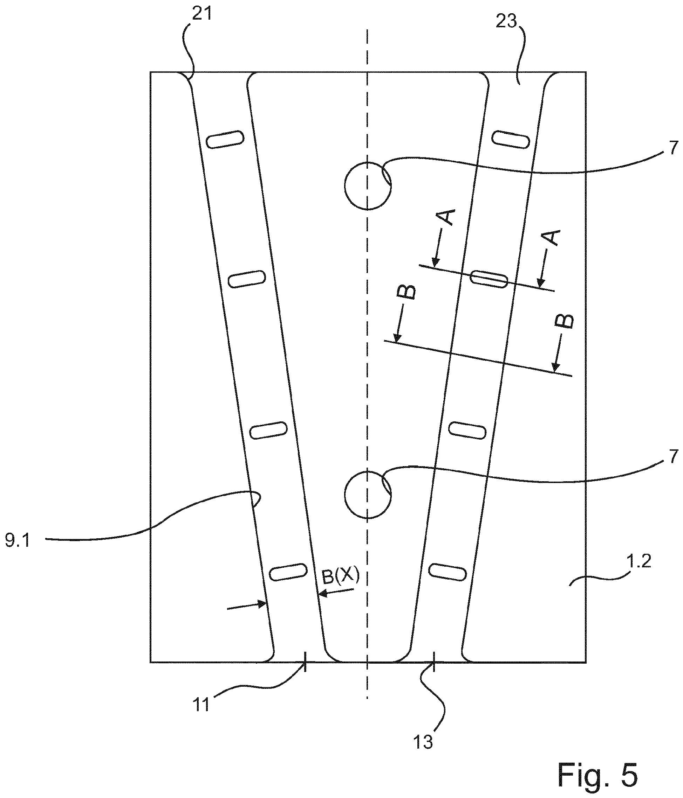

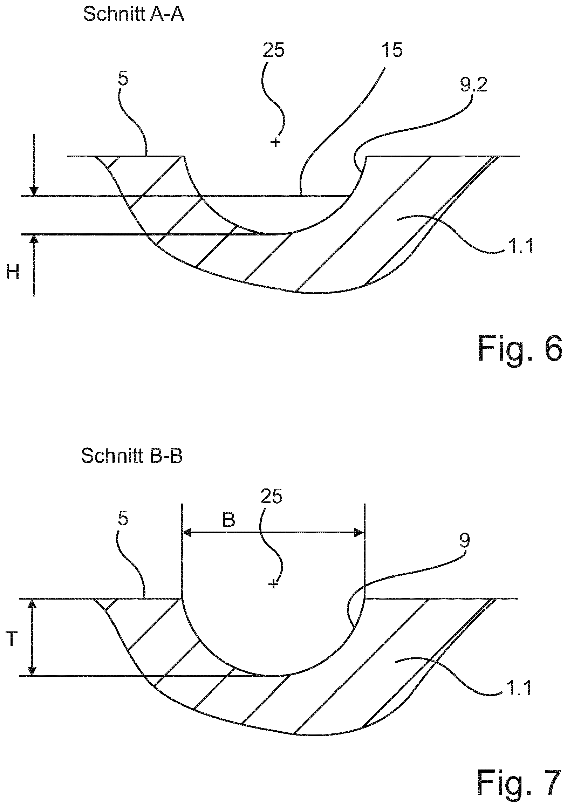

Die Richtung der Längsachse X ist deswegen von Bedeutung, weil bei manchen Ausführungsformen die Breite und die Tiefe T der Klemmnuten 9 nicht konstant ist, sondern sich ändert in Abhängigkeit der Koordinate der Längsachse X ändert. Dabei ist im Koordinatenursprung 11 eine Breite B bzw. eine Tiefe T der Klemmnut 9.1 minimal. In den Figuren 5 und 7 sind die Breite B bzw. die Tiefe T der Klemmnut 9 eingezeichnet. Sie nehmen in der Klemmnut 9.1 in der Figur 2 nach oben hin zu. Bei der zweiten Klemmnut 9.2 verhält es sich genau umgekehrt. Ihre Breite B ist im Bereich des Bolzenauges 3 der Durchmesser kleiner als am unteren Ende 13 der zweiten Klemmnut 9.2.

In der Figur 2 ist gut zu erkennen, dass bei diesem Ausführungsbeispiel in den Klemmnuten 9.1 und 9.2 Querrippen 15 ausgebildet sind. Die Querrippen 15 dienen dazu, lokal die Verformung und Flächenpressung zwischen dem Faserseil und den Halbschalen 1.1 bzw. 1.2 zu erhöhen und dadurch eine noch weiter verbesserte Krafteinleitung bzw. einen noch weiter verbesserten Reibschluss zwischen Faserseil und den Halbschalen 1.1 und 1.2 herzustellen.

In der Figur 3 ist die Draufsicht auf die Halbschale 1.1 und das "halbe" Bolzenauge 3.1 mit eingelegtem Faserseil 17 dargestellt. Wenn in das Faserseil 17 eine Kraft F eingeleitet wird, dann muss diese Kraft F bei der erfindungsgemäßen Seilendverbindung über die Länge der Klemmnuten 9.1 und 9.2 durch Reibschluss und/oder Formschluss im Bereich der Querrippen 15 in die Halbschalen 1.1 bzw. 1.2 eingeleitet werden.

Es liegt auf der Hand, dass im Ursprung 11 der Längsachse X die gesamte Last F auf das Faserseil wirkt. Infolge dessen wird ein Durchmesser des Faserseils 17 kleiner sein als der Nenndurchmesser des Faserseils 17, wenn dieses ohne Last ist. In der ersten Klemmnut 9.1 wird bis zu dem in Figur 3 oberen Ende der Halbschale 1.1 ein erheblicher Teil der Last F durch Reibschluss abgebaut. Es ist nun möglich, dass in der ersten Klemmnut 9.1 die gesamte Last F abgebaut wird, so dass das Faserseil 17 am oberen Ende der ersten Klemmnut 9.1 keine Last mehr trägt. Das Faserseil 17 wird dann ohne Last um das Bolzenauge 3 herumgeführt und anschließend in der zweiten Klemmnut 9.1 geklemmt. In diesem Fall wäre die zweite Klemmnut 9.1 als Sicherheitsreserve ausgelegt. Sie wird erst aktiv, wenn der Reibschlusses zwischen dem Faserseil 17 und den Halbschalen im Bereich der ersten Klemmnut 9.1 überlastet wird.

Es ist aber auch möglich, dass die erste Klemmnut 9.1 nur etwa die halbe Last F durch einen Reibschluss abbaut und die zweite Hälfte der Last F in der zweiten Klemmnut 9.1 durch einen Reibschluss abgebaut wird.

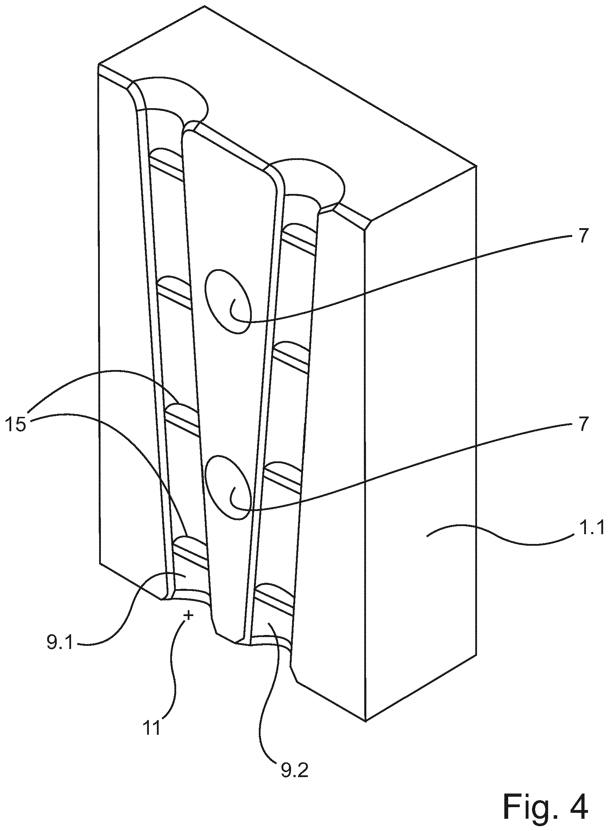

In der Figur 4 ist nochmal die Halbschale 1.1 in einer Isometrie dargestellt. Aus diese Isometrie lassen sich die Klemmnuten 9.1, 9.2, die Durchgangsöffnungen 7 und die Querrippen 15 gut erkennen. Die zweite Halbschale 1.2 ist symmetrisch zu der Trennebene 5 aufgebaut, so dass auf eine gesonderte Darstellung der zweiten Halbschale 1.2 verzichtet werden kann.

In der Figur 4 ist das Bolzenauge 3 nicht dargestellt. Alternativ zu dem dargestellten Bolzenauge 3 mit einer Befestigungsbohrung 19 können auch andere mechanische Schnittstellen ausgebildet sein. Diese mechanischen Schnittstellen sind unabhängig von der erfindungsgemäßen Klemmverbindung zwischen dem Faserseil und den Halbschalen und dienen dazu, die Verbindung zu einem Bauwerk, einem Kran, einem Hebezeug oder anderen Einrichtungen zu ermöglichen.

In der Figur 5 ist nun eine Draufsicht auf die Halbschale 1.1 gemäß der Figur 4 dargestellt. Anhand dieser Draufsicht sollen einige geometrische Größen der erfindungsgemäßen Seilendverbindung erläutert werden. Eine Breite B der Klemmnuten 9.1 und 9.2 ist in der Figur 5 dargestellt. In einer vorteilhaften Ausgestaltung der Erfindung ist die Breite B eine Funktion der Längsachse X. In anderen Worten: Die Breite B im Ursprung 11 ist kleiner als die Breite B am anderen Ende 21 der ersten Klemmnut 9.1. Dementsprechend ist die Breite B an dem in Figur 5 oberen Ende 23 der zweiten Klemmnut 9.2 kleiner als die Breite B der zweiten Klemmnut 9.2. am unteren Ende 13.

Ein Kegelverhältnis C wird definiert durch die Breite B₂₁-B₁₁/L. Dabei ist Länge L die Länge der ersten Klemmnut 9.1. In entsprechender Weise kann ein Kegelverhältnis der zweiten Klemmnut 9.1 definiert als B₁₃-B₂₃/L. Dieses Kegelverhältnis ist auf die Eigenschaften und die Lasten des zu klemmenden Faserseils 17 abgestimmt, so dass über die gesamte Länge der Klemmnuten 9.1 und 9.2 unter Last des Faserseils 17 eine nahezu gleichmäßige Flächenpressung zwischen dem Faserseil 17 und den Klemmnuten 9.1 und 9.2 der Halbschalen 1 erfolgt.

In der Figur 6 ist ein Schnitt durch die zweite Klemmnut 9.2 im Bereich einer Querrippe 15 dargestellt. Dieser Schnitt ist im Bereich aller Querrippen 15 gleich. In der Figur 6 wird deutlich, dass erstens die Klemmnuten 9 einen kreisbogenförmigen Querschnitt aufweisen. Ein Mittelpunkt 25 liegt jedoch außerhalb der Trennebene 5. Eine Höhe H der Rippe 15, ausgehend vom Grund der Klemmnut 9.2 bzw. 9.1 ist ebenfalls eingezeichnet.

In der Figur 7 ist ein Schnitt entlang der Linie B-B dargestellt. In diesem Schnitt ist keine Querrippe 15 zu sehen. In dieser Darstellung sind eine Tiefe T und Breite B der Klemmnut 9 gut erkennen.

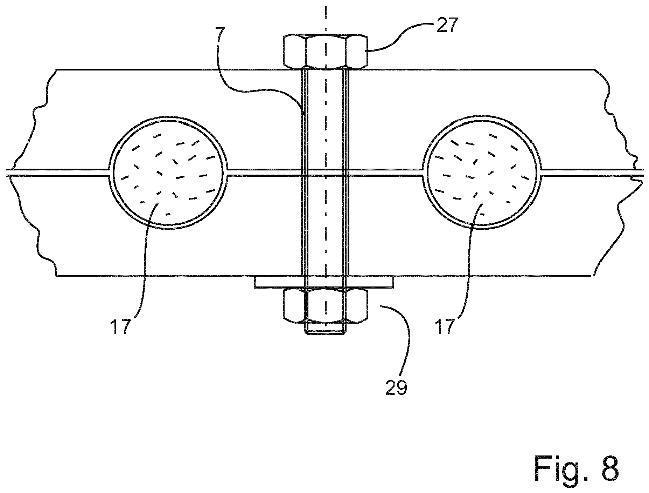

In der Figur 8 ist nun die Situation dargestellt, dass zwei Halbschalen, 1.1 und 1.2 aufeinandergelegt sind. Aus dieser Ansicht wird deutlich, dass die daraus resultierenden Klemmnuten 9.1 und 9.2 nicht ganz kreisförmig sind. Der Querschnitt ist ähnlich einer Ellipse.

Im Ergebnis ist die Höhe H der Querrippen gleich T/2. Dabei ist die Tiefe T einer einzelnen Klemmnut kleiner als 0,5-mal der Nenndurchmesser D_{Nenn} des Faserseils 17. Dann ist eine ausreichende Klemmung zwischen dem Faserseil 17 und den Halbschalen 1.1 und 1.2 gewährleistet.

Die Tiefe T einer einzelnen Klemmnut 9 sollte größer als 0,25-mal dem Nenndurchmesser des Faserseils sein. Dann ist gewährleistet, dass die Flächenpressung nicht zu groß wird. Wenn nämlich die Halbschalen 1.1 und 1.2 in der Trennebene 5 aneinander anliegen, ist eine weitere Erhöhung der Klemmung zwischen dem Faserseil 17 und den Halbschalen 1.1 bzw. 1.2 nicht mehr möglich.

In der Figur 8 ist exemplarisch eine Klemmschraube 27 mit der dazugehörigen Mutter 29 dargestellt. Durch Anziehen der Klemmschraube 27 bzw. der Mutter 29 werden die beiden Halbschalen 1.2. und 1.2 miteinander verspannt.

### Bezugszeichenliste

1 Halbschale
3 Bolzenauge
5 Trennebene
7 Durchgangsöffnung
9 Klemmnut
11 Ursprung der Längsachse X
13 Ende der Klemmnut 9.2
15 Querrippe
17 Faserseil
19 Befestigungsbohrung
21 (oberes) Ende der ersten Klemmnut 9.1
23 (oberes) Ende der zweiten Klemmnut 9.2
25 Mittelpunkt
27 Schraube
29 Mutter

## Patentansprüche

1. Seilendverbindung mit einem Faserseil (17) und einem Endteil (3) für eine Montage oder Halterung des Faserseils (17), wobei das Faserseil (17) aus mehreren miteinander verschlungenen Filamenten besteht, umfassend zwei gegeneinander verspannbare Halbschalen (1.1, 1.2), wobei in jeder Halbschale (1.1, 1.2) mindestens eine, bevorzugt zwei Klemm-Nuten (9.1, 9.2) ausgebildet sind.

2. Seilendverbindung nach Anspruch 1, **dadurch gekennzeichnet, dass** in den Klemm-Nuten (9.1, 9.2) mindestens eine, bevorzugte mehrere Querrippen (15) vorhanden sind.

3. Seilendverbindung nach Anspruch 1 oder 2, **dadurch gekennzeichnet, dass** eine Tiefe (T) der Klemm-Nuten (9.1, 9.2) kleiner als 0,5-mal der Nenndurchmesser (D_{Nenn}) des zu klemmenden Faserseils (17) ist (T < 0,5 X D_{Nenn)} •

4. Seilendverbindung nach einem der vorhergehenden Ansprüche, **dadurch gekennzeichnet, dass** eine Tiefe (T) der Klemm-Nuten (9.1, 9.2) größer als 0,25-mal der Nenndurchmesser (D_{Nenn}) des zu klemmenden Faserseils (17) ist (T > 0,25 x D_{Nenn)} .

5. Seilendverbindung nach einem der vorhergehenden Ansprüche, **dadurch gekennzeichnet, dass** eine Breite (B) der Klemm-Nuten (9.1, 9.2) kleiner als 0,95-mal der Nenndurchmesser (D_{Nenn}) des zu klemmenden Faserseils (17) ist (B < 0,95 x D_{Nenn)} .

6. Seilendverbindung nach einem der vorhergehenden Ansprüche, **dadurch gekennzeichnet, dass** die Klemm-Nuten (9.1, 9.2) mindestens bereichsweise konisch sind.

7. Seilendverbindung nach einem der vorhergehenden Ansprüche, **dadurch gekennzeichnet, dass** die Klemm-Nuten (9.1, 9.2) ganz oder mindestens bereichsweise zylindrisch sind.

8. Seilendverbindung nach einem der vorhergehenden Ansprüche, **dadurch gekennzeichnet, dass** die Breite (B) und/oder die Tiefe (T) der Klemm-Nuten (9.1, 9.2) in Richtung einer Längsachse (X) der Klemm-Nuten (9.1, 9.2) mindestens bereichsweise abnimmt.

9. Seilendverbindung nach Anspruch 6, **dadurch gekennzeichnet, dass** die Breite (B) und/oder die Tiefe (T) der Klemm-Nuten (9.1, 9.2) mindestens bereichsweise ein Kegelverhältnis (C) von mindestens 0,01 hat.

10. Seilendverbindung nach einem der vorhergehenden Ansprüche, **dadurch gekennzeichnet, dass** sie mindestens eine Schraubverbindung aufweist, und dass die mindestens eine Schraubverbindung die Halbschalen (1.1, 1.2) gegeneinander verspannt.

11. Seilendverbindung nach einem der vorhergehenden Ansprüche, **dadurch gekennzeichnet, dass** die Halbschalen (1.1, 1.2) aus Kunststoff, bevorzugt aus Polyamid, bestehen.

12. Seilendverbindung nach einem der vorhergehenden Ansprüche, **dadurch gekennzeichnet, dass** das Endteil ein Bolzenauge (3) ist.

13. Seilendverbindung nach Anspruch 11, **dadurch gekennzeichnet, dass** das Endteil an einer oder beiden Halbschalen (1.1, 1.2) ausgebildet ist.
